# EUROPEAN PATENT SPECIFICATION

(11) **EP 3 701 305 B1**
(45) Date of publication and mention of the grant of the patent: **05.03.2025**
(21) Application number: 18799462.9
(22) Date of filing: 26.10.2018
(51) Int. Cl.: G02B 6/44

(54) **CABLE ATTACHMENT SYSTEM**
KABELBEFESTIGUNGSSYSTEM
SYSTÈME DE FIXATION DE CÂBLE

(30) Priority: 27.10.2017 US 201762578223 P
(43) Date of publication of application: 02.09.2020
(73) Proprietor: CommScope Connectivity Belgium BVBA, 3010 Kessel-Lo (BE)
(72) Inventor: VERMEULEN, Pieter, Hickory, North Carolina 28602 (US); GEENS, Johan, Hickory, North Carolina 28602 (US)
(74) Representative: Murgitroyd & Company
(86) International application number: PCT/EP2018/079500
(87) International publication number: WO 2019/081763

(56) References cited:
- EP-A1- 3 032 304
- US-A- 5 535 298
- US-A1- 2003 037 953
- US-A1- 2014 131 527
- US-A1- 2016 170 164
- US-A1- 2017 003 467
- US-A1- 2017 045 701
- US-A1- 2017 153 406

## Description

### CROSS-REFERENCE TO RELATED APPLICATION

This application claims the benefit of U.S. Patent Application Serial No. 62/578,223, filed on October 27, 2017.

### BACKGROUND

There are systems that take in subscriber or distribution cables, splice them to a pigtail cable, and then connect the cable to equipment. A number of cables entering the systems and managed in dense configurations. Improvements in increasing cable holding capacities in a minimum footprint, without losing functionality, are desirable. US patent publications - US 5 535 298 A and US 2017/003467 A1 - may be useful for understanding the present invention.

### SUMMARY

The invention is set out in the appended set of claims. In general terms, the present disclosure relates to a cable attachment system. In one possible configuration and by non-limiting example, the system includes one or more cable clamping brackets for securing a plurality of cables. Various aspects are described in this disclosure, which include, but are not limited to, the following aspects.

### BRIEF DESCRIPTION OF THE DRAWINGS

FIG. 1 illustrates a cable attachment system in accordance with an exemplary embodiment of the present disclosure.
FIG. 2 is a schematic perspective view of an example telecommunications system.
FIG. 3 is a schematic front view of the telecommunications system of FIG. 2.
FIG. 4 illustrates an example cable clamping area.
FIG. 5 is a front perspective view of an example cable clamping bracket.
FIG. 6 is a rear perspective view of the cable clamping bracket of FIG. 5.
FIG. 7 is another perspective view of the cable clamping bracket of FIG. 5.
FIG. 8 is a exploded perspective view of the cable clamping bracket of FIG. 5.
FIG. 9 illustrates the cable clamping bracket being mounted to the cable clamping area.
FIG. 10 illustrates a plurality of cable clamping brackets being mounted to the cable clamping area.
FIG. 11 illustrates a plurality of cable clamping brackets being mounted to the cable clamping area.
FIG. 12 illustrates another example of the cable clamping bracket.
FIG. 13 illustrates yet another example of the cable clamping bracket.

### DETAILED DESCRIPTION

Various embodiments will be described in detail with reference to the drawings, wherein like reference numerals represent like parts and assemblies throughout the several views.

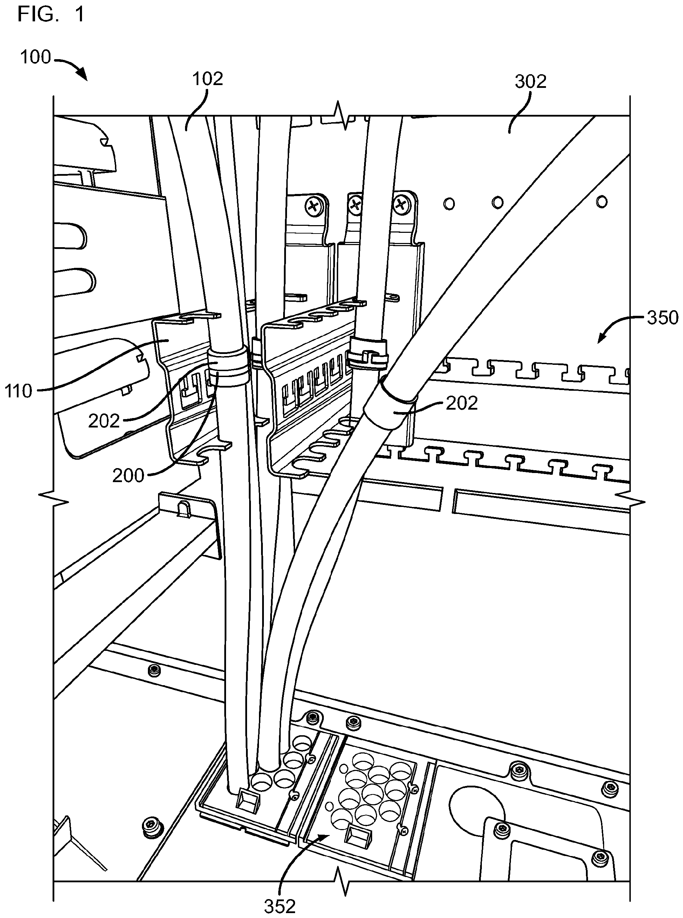

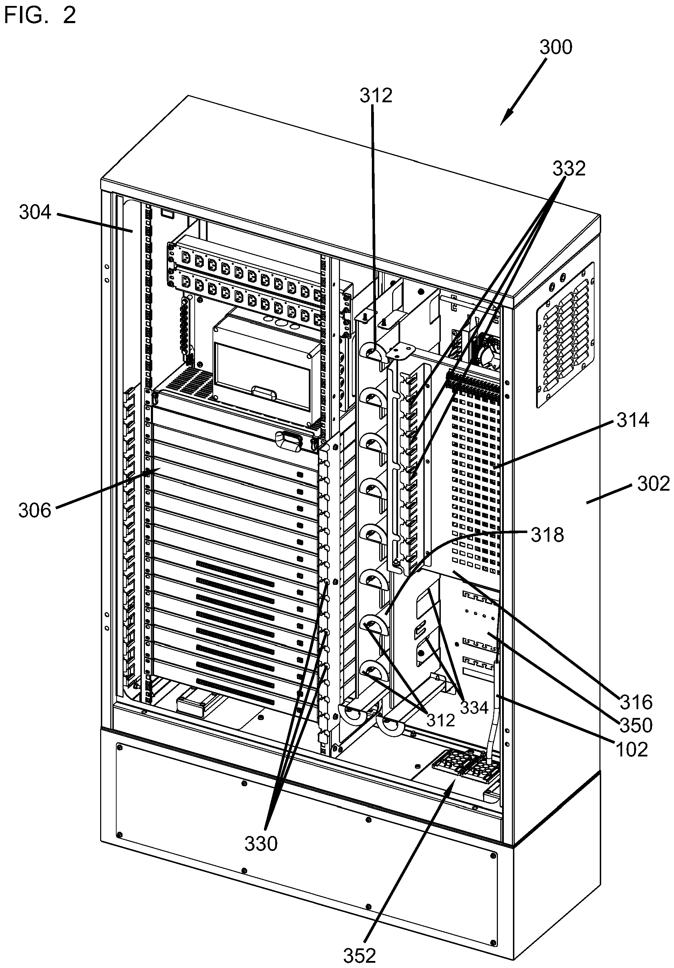

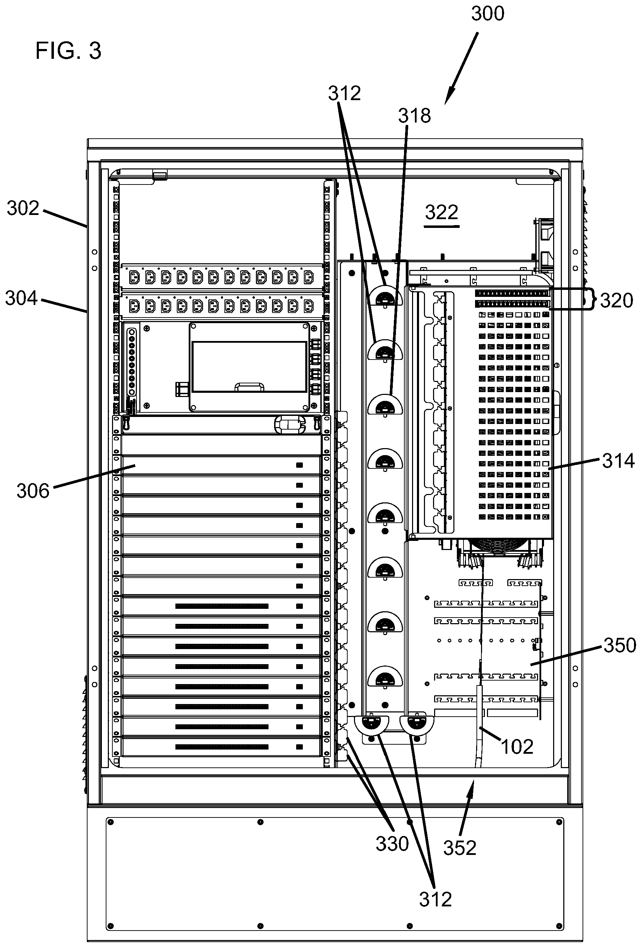

FIG. 1 illustrates a cable attachment system 100 in accordance with an exemplary embodiment of the present disclosure. The cable attachment system 100 can be part of a telecommunications system 300 and configured to secure a plurality of cables 102 to a desired location. In the illustrated example of FIG. 1, the cable attachment system 100 is provided to a cabinet 302 of the telecommunications system 300, an example of which is illustrated and described with reference to FIGS. 2 and 3.

The cable attachment system 100 may include one or more cable clamping brackets 110. As described herein, the cable clamping brackets 110 allow an increasing number of cables to be secured to the cabinet 302 in a dense configuration, such as at a cable clamping area in the cabinet 302.

Referring to FIGS. 2 and 3, an example of the telecommunications system 300 is described. The system 300 includes the cabinet 300 that includes a rack or framework 304 for holding or mounting telecommunications equipment. Many embodiments are possible. In the example illustrated, the framework 304 is generally rectangular defining an interior holding the interior components, to be described further below.

The system 300 includes telecommunications equipment 306. The equipment 306 can be many different types of equipment that is used in fiber optic systems. For example, the equipment 306 can include active or passive equipment, including, e.g., an amplifier, etc.

In the illustrated example, the telecommunications equipment 306 is arranged in a vertical column. In general, fiber optic cables (such as the cables 102) can be routed from a central office to the system 300 and into the cabinet 302 via a cable clamping area 350, and then be connected to the equipment 306.

The system 300 further includes a plurality of slack storage members or spools 312. The spools 312 are mounted within the cabinet 302 to manage overlength slack in the fiber optic cables within the cabinet 302. The spools 312 organize and take up overlength or slack in the cables from the equipment 306. The spools 312 may be the types that are described in U.S. Patent No. 6,289,159, titled Optical Fiber Distribution System, filed February 13, 1997.

In the illustrated example, the spools 312 are arranged in a vertical column adjacent to the column of telecommunications equipment 306.

In accordance with principles of this disclosure, the system 300 includes a patch panel 314 mounted within the cabinet 302. The patch panel 314 is provided as is well known in the art and defines a plurality of cable termination locations for receiving at least some of the fiber optic cables in the system 300, as the cables are connected between the equipment 306 and the patch panel 314.

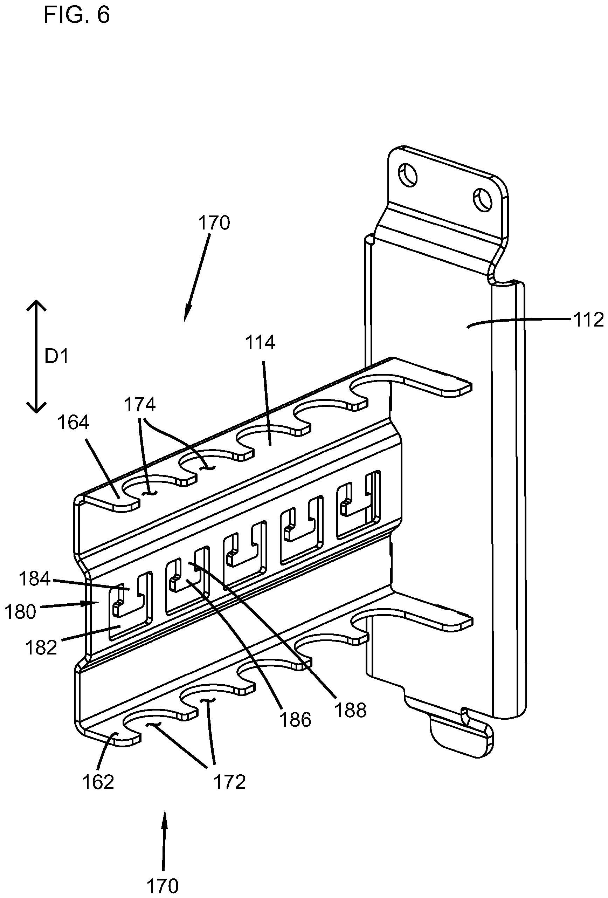

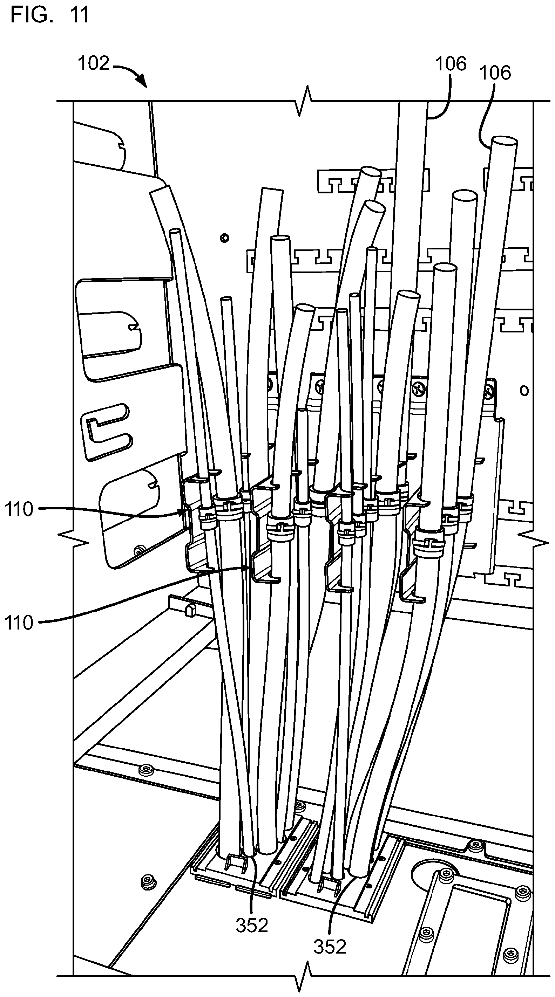

The patch panel 314 is mountable on a pivotable frame 316. The pivotable frame 316 is movable between a storage position (FIGS. 1 and 2) and an access position (FIGS. 6 and 11). As can be seen in FIG. 1, the plurality of spools 312 is positioned intermediate the telecommunications equipment 306 and the patch panel 314. As can also be realized from a review of FIG. 1, the pivotable frame 316 is adjacent the column of spools 312, and the column of spools 312 is between the column of telecommunications equipment 306 and the pivotable frame 316.

A plurality of cable radius limiters 318 can be mounted on the pivotable frame 316 to help manage the cable and protect the fibers in the cable. The radius limiters 318 are positioned between the patch panel 314 and a splice area. The splice area can be mounted within the cabinet 302 (e.g., on a wall 322 thereof) and is accessible when the pivotable frame 316 is in the access position. The splice area receives fiber optic cables from the patch panel 314 and is for splicing to additional cables. In many systems, the cables then exit the cabinet 302 and are directed to customers. The splice area can be many different embodiments including splice trays, such as those described in U.S. Patent No. 6,304,707, titled Optical Fiber Organizer, filed November 19, 1997. The cables may enter the splice area via troughs. Optionally, the cables may include a cable clamping device, and there may be a termination unit associated with the tray.

In the some embodiments, the splice area is mountable on the pivotable frame 316 on a side of the pivotable frame 316 that is opposite from the side holding the patch panel 314. It can be appreciated that the plurality of cable radius limiters 318 are positioned along the edge of the pivotable frame 316 between the side holding the patch panel 314 and the side holding the splice area. In this example, the radius limiters 318 are arranged in a column along the edge.

In some embodiments, there can be a storage arrangement or "parking area" 320 for holding one or more unconnected cables that are not connected into the patch panel termination locations. The parking area 320 can include, for example, a housing or arrangement such as described in U.S. Patent No. 7,218,827, titled Multi-position Fiber Optic Connector Holder and Method, filed June 18, 2004. The parking area 320 can also include, for example, any type of structure (e.g., a foam block) that uses friction to hold the unconnected cables.

Referring still to FIGS. 2 and 3, the system 300 may include various structures for managing cables for routing, organizing, and preventing sharp radii. For example, cable managers 330 are adjacent to the equipment 306, and they are along opposite sides of the equipment 306. There are also cable managers 332 located between the patch panel 314 and the spools 312. Access openings 334 are also provided below the patch panel 314 and adjacent to the spools 312.

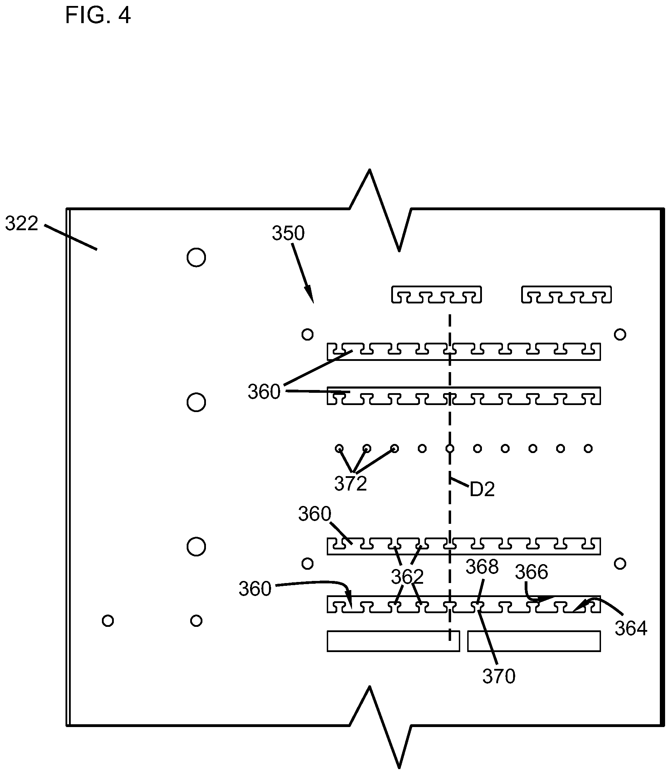

A cable clamping area 350 is provided between a cable port area 352 in the cabinet 302 and the splice area. The cable clamping area 350 can be provided to the wall 322 (e.g., a back plate of the cabinet 302) and configured to attach a plurality of cables 102 entering the cabinet 302 through the cable port area 352. As described herein, the cable clamping area 350 can be used to mount the cable clamping brackets 110. An example of the cable clamping area 350 is further illustrated and described with reference to FIG. 4.

The system 100 may have other cable management features, example of which are described in PCT/EP2017/075090, titled TELECOMMUNICATIONS SYSTEM AND METHODS, filed October 3, 2017.

Referring to FIG. 4, an example of the cable clamping area 350 is further illustrated and described. The cable clamping area 350 is configured to directly secure a plurality of cables 102 entering or exiting the cabinet 302 through the cable port area 352. As described herein, the cable clamping area 350 can be used to mount a plurality of cable clamping brackets 110 that is configured to secure a plurality of cables 102 thereto.

In some embodiments, the cable clamping area 350 can be provided to a wall of the cabinet 302. In the illustrated example, the cable clamping area 350 is arranged at the wall 322. Other locations are also possible for the cable clamping area 350.

In some embodiments, the cable clamping area 350 includes a retention opening 360 defined in the wall 322. The retention opening 360 has a lower edge 364 and an opposite upper edge 366.

The cable clamping area 350 can include a plurality of cable retention tabs 362 extending from either or both of the lower edge 364 and the upper edge 336 of the retention opening 360. Each of the cable retention tabs 362 is configured to retain a cable 102 with a cable fastening element, such as a tie wrap or a cable clamp. For example, a tie wrap can wrap around the cable 102 and the cable retention tab 362 together so that the cable 102 is abutted at least to the cable retention tab 362, thereby securing the cable 102 to the cable clamping area 350. As illustrated, in some embodiments, the cable retention tab 362 is configured as a T-shaped tab having a head portion 368 wider than a neck portion 370 so that the fastening element (e.g., the tie wrap) is contained around the neck portion 370 under the head portion 368 when the fastening element fastens the cable 102 to the cable retention tab 362.

The cable clamping area 350 further includes a plurality of holes 372. In some embodiments, the holes 372 can be used to fix a strength member of the cable 102. For example, a bolt passes through the hole 372 and presses the strength member of the cable 102 against the wall of the cable clamping area 350. In some embodiments, a nut can be positioned at the back of the cable clamping area 350 and tighten the bolt to fasten the strength member. In some embodiments, a fixation bracket can be additional used for strength member fixation.

In some embodiments, the holes 372 are aligned with the cable retention tabs 362 in a longitudinal direction D2.

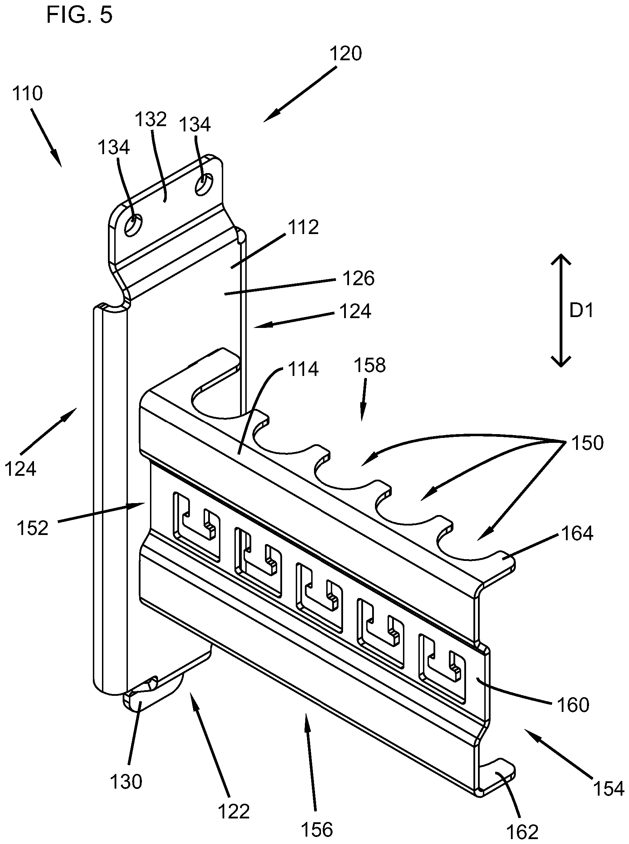

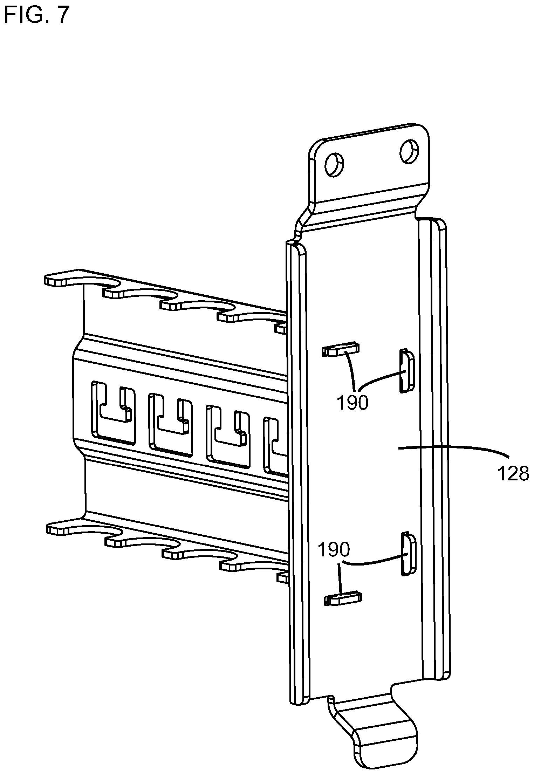

Referring to FIGS. 5-8, an example of the cable clamping bracket 110 is described. In some embodiments, the cable clamping bracket 110 is configured to detachably mount to the cable clamping area 350. The cable clamping bracket 110 can include a base plate 112 and a cable holding plate 114.

The base plate 112 is configured to mount to the cable clamping area 350. The base plate 112 has a first end 120 and a second end 122 opposite to the first end 120. The base plate 112 further has opposite side ends 124 extending between the first end 120 and the second end 122. The base plate 112 has a front face 126 and an opposite rear face 128 (FIG. 6). As described herein, the cable holding plate 114 extends from the front face 126 of the base plate 112, and the rear face 128 of the base plate 112 is configured to abut, or arrange adjacent, the cable clamping area 350.

Various methods can be used to mount the base plate 112 to the cable clamping area 350. In the illustrated example, the base plate 112 includes a base retention leg 130 and a base fastening tab 132. In some embodiments, the base plate 112 is mounted to the cable clamping area 350 using both of the base retention leg 130 and the base fastening tab 132.

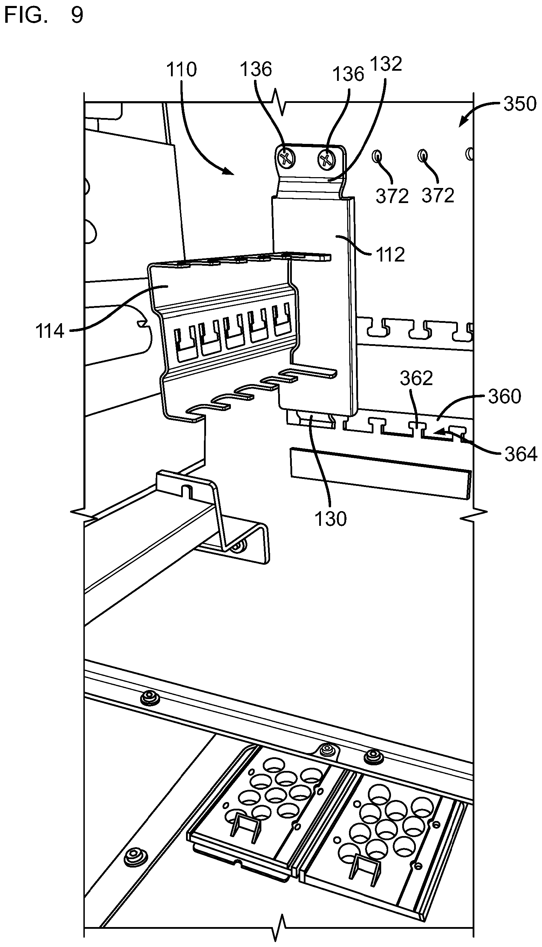

The base retention leg 130 is configured to engage with the cable clamping area 350, as further described with reference to FIG. 9. The base retention leg 130 can extend from the second end 122 of the base plate 112 and configured to engage with an opening of the cable clamping area 350.

The base fastening tab 132 is configured to fasten to the cable clamping area 350, as further described with reference to FIG. 9. In some embodiments, the base fastening tab 132 includes one or more holes 134. As illustrated in FIG. 9, a fastener 136, such as a screw, can pass through the hole 134 and press the base fastening tab 132 against the cable clamping area 350, thereby fastening the base fastening tab 132 to the cable clamping area 350.

In some embodiments, the base plate 112 is mounted to the cable clamping area 350 using both of the base retention leg 130 and the base fastening tab 132. In other embodiments, only one of the base retention leg 130 and the base fastening tab 132 is used to mount the base plate 112 to the cable clamping area 350.

In other embodiments, the base plate 112 has the base fastening tabs 132 at both of the first end 120 and the second 122 to mount the base plate 112 to the cable clamping area 350. In yet other embodiments, the base plate 112 has the base retention tabs 130 at both of the first end 120 and the second 122 to mount the base plate 112 to the cable clamping area 350. Other alternatives are also possible in other embodiments.

Referring still to FIGS. 5-8, the cable holding plate 114 extends from the base plate 112 and includes a plurality of cable clamping devices or structures 150 configured to retain cables 102.

In some embodiments, the cable holding plate 114 extends from the base plate 112 (e.g., the front face 126 thereof) such that the cable holding plate 114 extends away from the cable clamping area 350 when the cable clamping bracket 110 is mounted to the cable clamping area 350 of the cabinet 302.

The cable holding plate 114 has a proximate end 152 and an opposite distal end 154. The cable holding plate 114 is connected to the base plate 112 at the proximate end 152. The cable holding plate 114 further has a first end 156 and an opposite second end 158, which extend between the proximate end 152 and the distal end 154.

The cable holding plate 114 includes a main plate portion 160 and opposite side portions, such as a first side portion 162 and a second side portion 164. The first side portion 162 extends from the main plate portion 160 at the first end 156, and the second side portion 164 extends from the main plate portion 160 at the first end 158. As illustrated, in some embodiments, the first side portion 162 and the second side portion 164 are arranged to be generally perpendicular to the main plate portion 160, and generally parallel to each other.

The first side portion 162 includes a plurality of cable alignment structures 170 configured to align the cables 102 between the first end 156 and the second end 158 and generally in a cable extension direction D1 along which the cable 102 is arranged relative to the cable clamping bracket 110.

Each of the cable alignment structures 170 includes a first groove 172 provided in the first side portion 162 and a second groove 174 provided in the second side portion 164. The first groove 172 and the second groove 174 are aligned in the cable extension direction D1. The first groove 172 and the second groove 174 are configured to at least partially receive the cable 102 thereon. In some embodiments, the first groove 172 and the second groove 174 are configured to have a curvature that generally matches a curvature of a diameter of the cable 102. In some embodiments, the first groove 172 and the second groove 174 can be dimensioned identically. In other embodiments, other configurations of the first groove 172 and the second groove 174 are possible.

The cable alignment structures 170 (e.g., sets of the first groove 172 and the second groove 174) can be arranged between the proximate end 152 and the distal end 154 of the cable holding plate 114 and spaced apart from each other. In some embodiments, the cable alignment structures 170 are equally spaced. In other embodiments, the cable alignment structures 170 are spaced at different distances. In the illustrated example, the cable holding plate 114 has five cable alignment structures 170, although other numbers of cable alignment structures 170 can be provided to the cable holding plate 114.

Referring still to FIG. 5-8, the main plate portion 160 includes a plurality of cable securing devices 180 configured to secure the cables 102 to the main plate portion 160. The cable securing device 180 can have various configurations for securing the cable 102 to the main plate portion 160. In some embodiments, a fastening element, such as a tie wrap or a cable clamp, is used with the cable securing device 180 to retain the cable 102 to the main plate portion 160. Other configurations can be used in other embodiments.

In the illustrated example, each of the cable securing device 180 includes an opening 182 and a cable retention tab 184. The cable retention tab 184 extends from an edge of the opening 182. The cable retention tab 184 is configured to retain the cable 102 with a cable fastening element, such as a tie wrap (e.g., a tie wrap 200 in FIG. 1) or a cable clamp. For example, a tie wrap can wrap around the cable 102 and the cable retention tab 184 together so that the cable 102 is abutted at least to the cable retention tab 184, thereby securing the cable 102 to the main plate portion 160. As illustrated, in some embodiments, the cable retention tab 184 is configured as a T-shaped tab having a head portion 186 wider than a neck portion 188 so that the fastening element (e.g., the tie wrap) is contained around the neck portion 188 under the head portion 186 when the fastening element fastens the cable 102 to the cable retention tab 184. The head portion 186 prevents the tie wrap from sliding out from the neck portion 188 of the cable retention tab 184.

The cable securing devices 180 can be arranged between the proximate end 152 and the distal end 154 of the cable holding plate 114 and spaced apart from each other. In some embodiments, the cable securing devices 180 are equally spaced. In other embodiments, the cable securing devices 180 are spaced at different distances. In the illustrated example, the cable holding plate 114 has five cable securing devices 180, although other numbers of cable securing devices 180 can be provided to the cable holding plate 114.

The cable securing devices or structures 180 is associated with the cable alignment structures 170, respectively. In the illustrated example, the cable securing devices 180 are aligned with the cable alignment structures 170, respectively, along the cable extension direction D1. As such, the cables 102 can be secured to the cable clamping brackets 110 (e.g., the cable holding plate 160 thereof) via the cable securing devices 180 while aligned by the cable alignment structures 170.

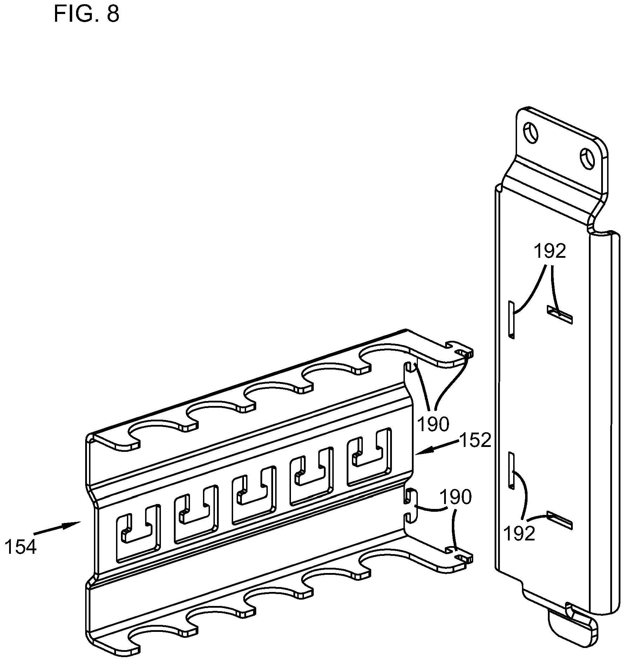

Referring to FIG. 8, the base plate 112 can be separately made from the cable holding plate 114 and connected to the cable holding plate 114. Various methods can be used to connect the cable holding plate 114 to the base plate 112. In the illustrated example, the cable holding plate 114 includes one or more fastening tabs 190 at the proximate end 152, which are configured to fit into corresponding slots 192 formed in the base plate 112. In some examples, the fastening tabs 190 of the cable holding plate 114 are snap-fitted to the slots 192 of the base plate 112. Other fastening mechanisms, such as using fasteners or adhesive materials or welding, can be used in other embodiments. In other embodiments, the base plate 112 is integrally formed with the cable holding plate 114. In some embodiments, the base plate 112 and the cable holding plate 114 are assembled in manufacturing. In other embodiments, the base plate 112 and the cable holding plate 114 can be assembled at site, or at other suitable places.

FIG. 9 illustrates that the cable clamping bracket 110 is mounted to the cable clamping area 350. As described herein, the base retention leg 130 of the bracket 110 is first inserted into the retention opening 360 and engaged with an edge (e.g., the lower edge 364) of the retention opening 360. Then, the base fastening tab 132 is fastened to the holes 372 of the cable clamping area 350 using the fasteners 136. In some embodiments, the base retention leg 130 is inserted through the retention opening 360 and placed between adjacent cable retention tabs 362.

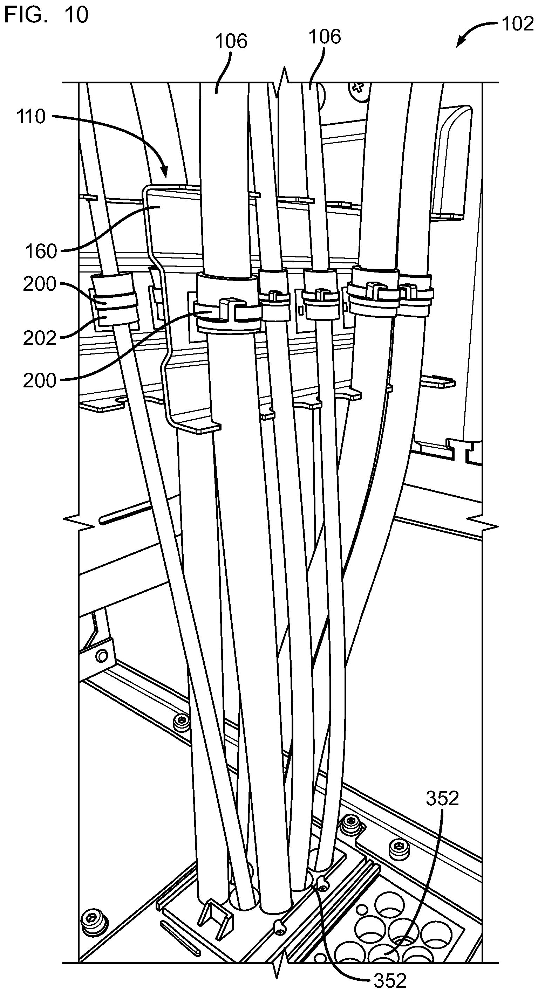

Referring to FIGS. 1, 10, and 11, a plurality of cable clamping brackets 110 are mounted to the cable clamping area 350, and a plurality of cables 102 are secured to the cable clamping brackets 110.

As illustrated, the brackets 110 are mounted to the cable clamping area 350 side-by-side (in a row). In other embodiments, the brackets 110 are mounted to the cable clamping area 350 and arranged in a plurality of rows.

The cables 102 that are managed by the brackets 110 can be of various configurations. In the illustrated example, the cables 102 include cable tubes or pipes 106 which enter or exit the cabinet 302 through the cable port area 352. In some embodiments, such tubes 106 are flexible and difficult to be held straight. As described herein, the alignment and securing features of the brackets 110 enable holding the tubes 106 in place.

Various sizes of the tubes 106 can be secured to the brackets 110. For example, the tubes 106 have a diameter ranging from about 7 mm to about 14 mm. Other sizes of the tubes can also be mounted to the brackets 110.

In other embodiments, the cables 102 can include fiber optic cables, which includes, for example, cable jackets, cable strength members, and cable containment tubes.

As illustrated, the cables 102 (e.g., the tubes 106) can be secured to the brackets 110 using a fastening element, such as a tie wrap 200. The tie wrap 200 can wrap around the cable 102 and the cable retention tab 184 together so that the cable 102 is abutted at least to the cable retention tab 184, thereby securing the cable 102 to the main plate portion 160.

In some embodiments, a foam tape 202 is used to provide additional friction between the cable 102 and the tie wrap 200. For example, the foam tape 202 is first wrapped around the cable 102 and then the tie wrap 200 surrounds the foam tape 202 to tie the cable 102 to the cable retention tab 184 of the bracket 110.

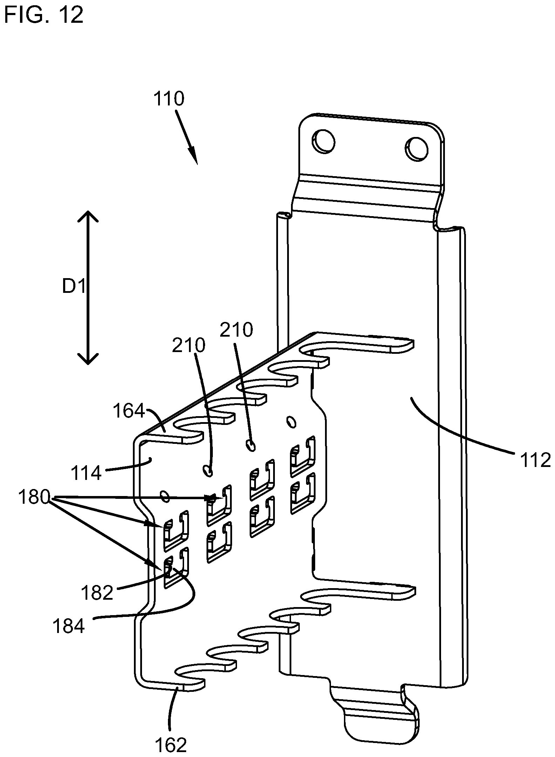

FIG. 12 illustrates another example of the cable clamping bracket 110. The cable clamping bracket 110 in this example is configured similar to the cable clamping device as illustrated in FIGS. 1 and 4-11. Thus, the same or similar reference numbers are used in this example to the extent possible, and the description thereof is omitted for brevity purposes.

In this example, the bracket 110 includes the cable securing devices 180 in two rows. Similarly, the bracket 100 can include more than two rows of cable securing devices 180 in other examples.

In this example, the bracket 110 further includes a plurality of strength member fixation holes 210. Where the cables 102 include fiber optic cables having strength members, the strength member fixation holes 210 can be used to fix strength members of the cables 102 while the cable securing devices 180 secure the cables 102 (i.e., the outer jacket thereof) thereto in the manner described herein. For example, screws can pass through the strength member fixation holes 210 and press the strength members of the cables 102 against the cable holding plate 114. In some embodiments, a nut can be positioned at the back of the cable holding plate 114 and tighten the screw to fasten the strength member. In some embodiments, a fixation bracket can be additional used for strength member fixation.

In some embodiments, the strength member fixation holes 210 are aligned with the cable securing devices 180 in the cable extension direction D1.

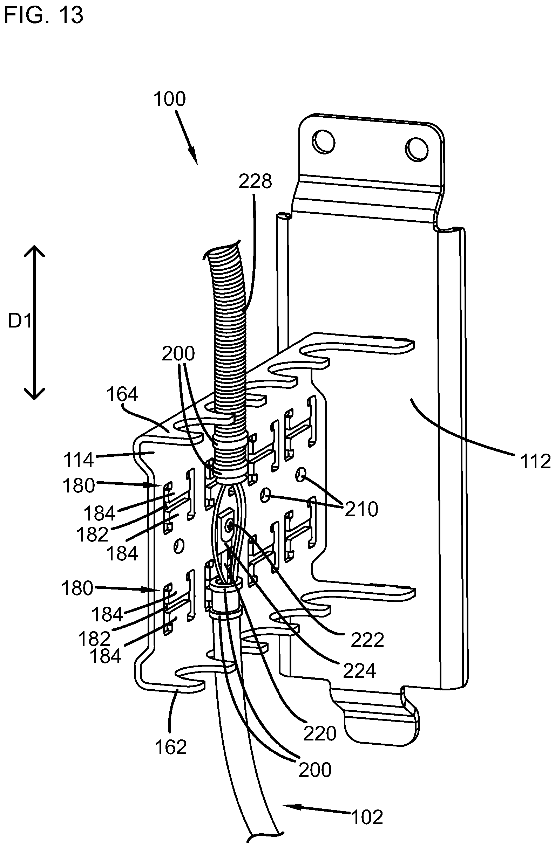

FIG. 13 illustrates yet another example of the cable clamping bracket 110. The cable clamping bracket 110 in this example is configured similar to the cable clamping device as illustrated in FIGS. 1 and 4-11 and/or FIG. 12. Thus, the same or similar reference numbers are used in this example to the extent possible, and the description thereof is omitted for brevity purposes.

In this example, the bracket 110 includes the cable securing devices 180 in two rows. Similarly, the bracket 100 can include more than two rows of cable securing devices 180 in other examples.

Each of the cable securing devices 180 in this example includes two cable retention tabs 184 in each of the openings 182, thereby providing more cable tying positions. As illustrated, the cable 102 can be secured to either or both of the two cable retention tabs 184 in each opening 182 using one or two tie wraps 200. In the illustrated example, the two cable retention tabs 184 are arranged to face each other (or oppositely) in the opening 182.

Further, the bracket 110 in this example includes the strength member fixation holes 210 arranged between two rows of the cable securing devices 180. In some embodiments, the strength member fixation holes 210 are aligned with the cable securing devices 180 in the cable extension direction D1.

As illustrated, a strength member 220 of the cable 102 can be fixed to the cable holding plate 114 using a screw 222 engaged into the strength member fixation hole 210. A strength member fixation bracket 224 can be additionally inserted between the screw 222 and the cable holding plate 114 to help fixing the strength member 220. In the illustrated example, the cable 102 is secured to the cable securing device 180 in a lower row, and fiber loose tubes 226 from the cable 102 can be routed to a tube 228 that is secured to the cable securing device 180 in an upper row. The tube 228 can be flexible and similar to the tubes 106. The tube 228 can be used to transition the cable to a fiber organizer in the cabinet 302.

The various examples and teachings described above are provided by way of illustration only and should not be construed to limit the scope of the present disclosure. Those skilled in the art will readily recognize various modifications and changes that may be made without following the examples and applications illustrated and described herein, and without departing from the scope of the present disclosure.

## Claims

1. A cable clamping bracket (110) configured to detachably mount to a cable clamping area (350) in a telecommunications system (300) the cable clamping bracket including:
a base plate (112) configured to mount to the cable clamping area; and
a cable holding plate (114) extending from the base plate and including a plurality of cable clamping structures (150), wherein the cable holding plate includes a main plate portion (160) and opposite side portions (162, 164) arranged to be generally perpendicular to the main plate portion and generally parallel to each other, wherein each of the cable clamping structures includes:
a cable securing device (180) configured to secure the cable with a tie wrap (200); and
a cable alignment device (170) configured to align the cable in a cable extension direction;
wherein each cable clamping structure is configured to retain a cable (102) thereto; and
wherein the cable alignment device includes grooves (172, 174) provided in the opposite side portions and configured to at least partially receive the cable.

2. A telecommunications system (300) comprising:
a cabinet (302) having a cable clamping area (350);
one or more cables (102) entering the cabinet; and
one or more cable clamping brackets (110) according to claim 1.

3. The telecommunications system according to claim 2, wherein the base plate includes a base retention leg (130) configured to engage with the cable clamping area.

4. The telecommunications system according to claim 2 or 3, wherein the base plate includes a base fastening tab (132) configured to fasten to the cable clamping area.

5. The telecommunications system according to claim 4, wherein the base fastening tab includes one or more holes (134) through which one or more fasteners (136) pass to fasten the base fastening tab to the cable clamping area.

6. The telecommunications system according to any of claims 3-5, wherein the cable clamping area includes a retention opening (360) configured to engage the base retention leg.

7. The telecommunications system according to any of claims 2-6, wherein the cable holding plate is configured to extend from the base plate such that the cable holding plate extends away from the cable clamping area when the cable clamping bracket is mounted to the cable clamping area of the cabinet.

8. The telecommunications system according to claim 1, wherein the cable securing device includes an opening (182) and a cable retention tab (184) extending from an edge of the opening, the cable retention tab configured to retain the cable with the tie wrap (200).

9. The telecommunications system according to claim 1, wherein the cable securing device is provided in the main plate portion.

10. The telecommunications system according to any of claims 2-9, wherein the cables include cable tubes (106).

11. The telecommunications system according to any of claims 2-10, wherein the cable clamping area is arranged at a wall (322) of the cabinet.

12. A method for securing cables (102) in a cable clamping area (350) in a telecommunications system (300), the method comprising:
aligning a cable with a cable alignment device (170) of a cable clamping bracket (110), wherein the cable clamping bracket includes:
a base plate (112) configured to mount to the cable clamping area; and
a cable holding plate (114) extending from the base plate and including a plurality of cable clamping structures (150),
wherein the cable holding plate includes a main plate portion (160)
and opposite side portions (162, 164) arranged to be generally perpendicular to the main plate portion and generally parallel to each other, and wherein the cable alignment device includes grooves (172, 174) in the opposite side portions;
securing the cable to a cable securing device (180) of the cable clamping bracket with a fastening element, the cable securing device being provided in the main plate portion; and
mounting the cable clamping bracket to the cable clamping area.

13. The method of claim 12, wherein the fastening element includes a tie wrap.

## Patentansprüche

1. Kabelklemmhalterung (110), konfiguriert zur lösbaren Anbringung an einem Kabelklemmbereich (350) in einem Telekommunikationssystem (300), wobei die Kabelklemmhalterung Folgendes beinhaltet:
eine Basisplatte (112), die zur Anbringung an dem Kabelklemmbereich konfiguriert ist; und
eine Kabelhalteplatte (114), die sich von der Basisplatte erstreckt und eine Vielzahl von Kabelklemmstrukturen (150) beinhaltet, wobei die Kabelhalteplatte einen Hauptplattenabschnitt (160) und gegenüberliegende Seitenabschnitte (162, 164) beinhaltet, die so angeordnet sind, dass sie im Allgemeinen senkrecht zu dem Hauptplattenabschnitt und im Allgemeinen parallel zueinander sind, wobei jede der Kabelklemmstrukturen Folgendes beinhaltet:
eine Kabelfesthaltevorrichtung (180), die zum Festhalten des Kabels mit einem Kabelbinder (200) konfiguriert ist; und
eine Kabelausrichtungsvorrichtung (170), die zur Ausrichtung des Kabels in einer Kabelerstreckungsrichtung konfiguriert ist;
wobei jede Kabelklemmstruktur zum Halten eines Kabels (102) daran konfiguriert ist; und
wobei die Kabelausrichtungsvorrichtung Nuten (172, 174) beinhaltet, die in den gegenüberliegenden Seitenabschnitten vorgesehen und so konfiguriert sind, dass sie das Kabel zumindest teilweise aufnehmen.

2. Telekommunikationssystem (300), umfassend:
einen Schrank (302) mit einem Kabelklemmbereich (350);
ein oder mehrere Kabel (102), die in den Schrank führen; und
eine oder mehrere Kabelklemmhalterungen (110) nach Anspruch 1.

3. Telekommunikationssystem nach Anspruch 2, wobei die Basisplatte einen Basishalteschenkel (130) beinhaltet, der so konfiguriert ist, dass er mit dem Kabelklemmbereich in Eingriff kommt.

4. Telekommunikationssystem nach Anspruch 2 oder 3, wobei die Basisplatte eine Basisbefestigungslasche (132) beinhaltet, die zur Befestigung an dem Kabelklemmbereich konfiguriert ist.

5. Telekommunikationssystem nach Anspruch 4, wobei die Basisbefestigungslasche ein oder mehrere Löcher (134) beinhaltet, durch die ein oder mehrere Befestigungselemente (136) hindurchgehen, um die Basisbefestigungslasche an dem Kabelklemmbereich zu befestigen.

6. Telekommunikationssystem nach einem der Ansprüche 3-5, wobei der Kabelklemmbereich eine Halteöffnung (360) beinhaltet, die so konfiguriert ist, dass sie mit dem Basishalteschenkel in Eingriff kommt.

7. Telekommunikationssystem nach einem der Ansprüche 2-6, wobei die Kabelhalteplatte so konfiguriert ist, dass sie sich derart von der Basisplatte erstreckt, dass sich die Kabelhalteplatte von dem Kabelklemmbereich weg erstreckt, wenn die Kabelklemmhalterung an dem Kabelklemmbereich des Schranks angebracht ist.

8. Telekommunikationssystem nach Anspruch 1, wobei die Kabelfesthaltevorrichtung eine Öffnung (182) und eine Kabelhaltelasche (184), die sich von einem Rand der Öffnung aus erstreckt, beinhaltet, wobei die Kabelhaltelasche so konfiguriert ist, dass sie das Kabel mit dem Kabelbinder (200) hält.

9. Telekommunikationssystem nach Anspruch 1, wobei die Kabelfesthaltevorrichtung in dem Hauptplattenabschnitt vorgesehen ist.

10. Telekommunikationssystem nach einem der Ansprüche 2-9, wobei die Kabel Kabelrohre (106) beinhalten.

11. Telekommunikationssystem nach einem der Ansprüche 2-10, wobei der Kabelklemmbereich an einer Wand (322) des Schranks angeordnet ist.

12. Verfahren zum Festhalten von Kabeln (102) in einem Kabelklemmbereich (350) in einem Telekommunikationssystem (300), das Verfahren umfassend:
Ausrichten eines Kabels mit einer Kabelausrichtungsvorrichtung (170) einer Kabelklemmhalterung (110), wobei die Kabelklemmhalterung Folgendes beinhaltet:
eine Basisplatte (112), die zur Anbringung an dem Kabelklemmbereich konfiguriert ist; und
eine Kabelhalteplatte (114), die sich von der Basisplatte erstreckt und eine Vielzahl von Kabelklemmstrukturen (150) beinhaltet, wobei die Kabelhalteplatte einen Hauptplattenabschnitt (160) und gegenüberliegende Seitenabschnitte (162, 164) beinhaltet, die so angeordnet sind, dass sie im Allgemeinen senkrecht zu dem Hauptplattenabschnitt und im Allgemeinen parallel zueinander sind, und wobei die Kabelausrichtungsvorrichtung Nuten (172, 174) in den gegenüberliegenden Seitenabschnitten beinhaltet;
Festhalten des Kabels an einer Kabelfesthaltevorrichtung (180) der Kabelklemmhalterung mit einem Befestigungselement, wobei die Kabelfesthaltevorrichtung in dem Hauptplattenabschnitt vorgesehen ist; und
Anbringen der Kabelklemmhalterung an dem Kabelklemmbereich.

13. Verfahren nach Anspruch 12, wobei das Befestigungselement einen Kabelbinder beinhaltet.

## Revendications

1. Support de serrage de câble (110) configuré pour monter de manière amovible sur une zone de serrage de câble (350) dans un système de télécommunications (300), le support de serrage de câble comportant :
une plaque de base (112) configurée pour être montée sur la zone de serrage de câble ; et
une plaque de maintien de câble (114) s'étendant depuis la plaque de base et comportant une pluralité de structures de serrage de câble (150), dans lequel la plaque de maintien de câble comporte une portion de plaque principale (160) et des portions latérales opposées (162, 164) agencées pour être généralement perpendiculaires à la portion de plaque principale et généralement parallèles les unes par rapport aux autres, dans lequel chacune des structures de serrage de câble comporte :
un dispositif d'arrimage de câble (180) configuré pour arrimer le câble avec une bande d'attache (200) ; et
un dispositif d'alignement de câbles (170) configuré pour aligner le câble dans une direction d'extension de câble ;
dans lequel chaque structure de serrage de câble est configurée pour y retenir un câble (102) ; et
dans lequel le dispositif d'alignement de câble comporte des rainures (172, 174) prévues dans les portions latérales opposées et configurées pour recevoir au moins partiellement le câble.

2. Système de télécommunications (300) comprenant :
une armoire (302) ayant une zone de serrage de câble (350) ;
un ou plusieurs câbles (102) entrant dans l'armoire ; et
un ou plusieurs supports de serrage de câble (110) selon la revendication 1.

3. Système de télécommunications selon la revendication 2, dans lequel la plaque de base comporte une patte de retenue de base (130) configurée pour venir en prise avec la zone de serrage de câble.

4. Système de télécommunications selon la revendication 2 ou 3, dans lequel la plaque de base comporte une patte de fixation de base (132) configurée pour se fixer à la zone de serrage de câble.

5. Système de télécommunications selon la revendication 4, dans lequel la patte de fixation de base comporte un ou plusieurs trous (134) à travers lesquels passent une ou plusieurs fixations (136) pour fixer la patte de fixation de base à la zone de serrage de câble.

6. Système de télécommunications selon l'une quelconque des revendications 3 à 5, dans lequel la zone de serrage de câble comporte une ouverture de retenue (360) configurée pour mettre en prise la patte de retenue de base.

7. Système de télécommunication selon l'une quelconque des revendications 2 à 6, dans lequel la plaque de maintien de câble est configurée pour s'étendre depuis la plaque de base de telle sorte que la plaque de maintien de câble s'étend à l'écart de la zone de serrage de câble lorsque le support de serrage de câble est monté sur la zone de serrage de câble de l'armoire.

8. Système de télécommunication selon la revendication 1, dans lequel le dispositif d'arrimage de câble comporte une ouverture (182) et une patte de retenue de câble (184) s'étendant depuis un bord de l'ouverture, la patte de retenue de câble étant configurée pour retenir le câble avec la bande d'attache (200).

9. Système de télécommunications selon la revendication 1, dans lequel le dispositif d'arrimage de câble est prévu dans la portion de plaque principale.

10. Système de télécommunications selon l'une quelconque des revendications 2 à 9, dans lequel les câbles comportent des tubes de câbles (106).

11. Système de télécommunications selon l'une quelconque des revendications 2 à 10, dans lequel la zone de serrage de câble est agencée au niveau d'une paroi (322) de l'armoire.

12. Procédé pour l'arrimage de câbles (102) dans une zone de serrage de câble (350) dans un système de télécommunications (300), le procédé comprenant :
l'alignement d'un câble avec un dispositif d'alignement de câbles (170) d'un support de serrage de câble (110), dans lequel le support de serrage de câble comporte :
une plaque de base (112) configurée pour être montée sur la zone de serrage de câble ; et
une plaque de maintien de câble (114) s'étendant depuis la plaque de base et comportant une pluralité de structures de serrage de câble (150), dans lequel la plaque de maintien de câble comporte une portion de plaque principale (160) et des portions latérales opposées (162, 164) agencées pour être généralement perpendiculaires à la portion de plaque principale et généralement parallèles les unes par rapport aux autres, et dans lequel le dispositif d'alignement de câbles comporte des rainures (172, 174) dans les portions latérales opposées ;
l'arrimage du câble à un dispositif d'arrimage de câble (180) du support de serrage de câble avec un élément de fixation, le dispositif d'arrimage de câble étant prévu dans la portion de plaque principale ; et
le montage du support de serrage de câble sur la zone de serrage de câble.

13. Procédé selon la revendication 12, dans lequel l'élément de fixation comporte une bande d'attache.
